# EUROPÄISCHE PATENTANMELDUNG

(11) **EP 1 258 702 A2**
(43) Veröffentlichungstag der Anmeldung: **20.11.2002**
(21) Anmeldenummer: 02008681.5
(22) Anmeldetag: 18.04.2002
(51) Int. Cl.: G01B 11/27

(54) **Vorrichtung und Verfahren zum Ausrichten von Maschinenwellen**

(30) Priorität: 17.05.2001 DE 10124287; 29.06.2001 DE 10132142
(71) Anmelder: Prüftechnik Dieter Busch AG, 85737 Ismaning (DE)
(72) Erfinder: Busch, Dieter, 85737 Ismaning (DE); Lysen, Heinrich, 85748 Garching b. München (DE)

(57) **Zusammenfassung**

Die Vorrichtung zum Ausrichten von zwei miteinander gekuppelten Maschinenwellen weist auf
- mindestens eine Laserlichtquelle zum Aussenden von Laserlicht
- mindestens einen Reflektor für die Reflektion des Laserlichtes
- mindestens eine Empfangsvorrichtung für den Empfang des Laserlichtes
- einer erste Recheneinrichtung zur Bestimmung des parallelen und angularen Versatzes der Maschinenwellen
- eine Auswerte- und Recheneinrichtung zur Bestimmung der Entfernung von Maschinenbefestigungselementen relativ zu einer zwischen den Maschinenwellen liegenden Symmetrieebene. Diese Symmetrieebene schneidet die Achsen der Maschinenwellen im wesentlichen senkrecht, d.h. mit einem Winkelfehler von besser als 6 Grad.

## Beschreibung

Die Erfindung betrifft eine Vorrichtung zum Ausrichten von Maschinenwellen.

Eine solche Vorrichtung ist bekannt aus der US 4,463,438, Erfinder Zatezalo. Die genannte Vorrichtung sieht die Verwendung von mechanischen Meßmitteln vor. Dementsprechend ist die erzielbare Genauigkeit beim Ausrichten von Maschinenwellen limitiert und hängt von verschiedenen mechanischen Randbedingungen ab, zum Beispiel vom Durchhang der Meßmittel. Eine ähnliche Vorrichtung mit wesentlich verbesserter Genauigkeit wird in der EP 0145745 beschrieben, Erfinder Lysen. Anstelle mechanischer Meßzeiger sieht die EP 0145745 solche auf Grundlage eines Laserstrahls vor. Dadurch konnte der Gebrauchswert von Wellenausricht-Instrumenten drastisch gesteigert werden. Insgesamt ermöglichte die jeweils vorgesehene Mikroelektronik und Meßmethodik ein rechnergestütztes, genaues und wesentlich komfortableres Ausrichten von Maschinenwellen, als dies vorher möglich war. Diesen innovativen Vorrichtungen der genannten Art haftet aber bis heute der Nachteil an, daß verschiedene Tätigkeiten vor oder nach dem eigentlichen Meßvorgang manuell ausgeführt werden müssen. Dies betrifft beispielsweise die Eingabe verschiedener Parameter, wie z.B. Dimensionsangaben, welche manuell in das jeweils zugehörige Rechnersystem eingegeben werden müssen. Eine weitere manuelle Tätigkeit besteht dann darin, errechnete Korrekturwerte manuell umzusetzen, d.h. mindestens eine Maschine in die drei Richtungen des Raumes zu verschieben oder zu justieren, wozu teilweise ein gewisser Kraftaufwand erforderlich ist. Wiewohl Lösungsvorschläge für das letztgenannte Problem existieren, gab es bislang keine Lösung, die erstmalige Eingabe von Maschinen-Dimensionen zu rationalisieren und zu automatisieren. Die vorliegende Erfindung löst dieses spezielle Problem.

Gemäß der Erfindung wird eine Vorrichtung zum Ausrichten von zwei miteinander gekuppelten Maschinenwellen vorgesehen, welche aufweist:
- mindestens eine Laserlichtquelle zum Aussenden von Laserlicht
- mindestens einen Reflektor für die Reflektion des Laserlichtes
- mindestens eine Empfangsvorrichtung für den Empfang des Laserlichtes
- eine erste Recheneinrichtung zur Bestimmung des parallelen und angularen Versatzes der Maschinenwellen
- eine Auswerte- und Recheneinrichtung zur Bestimmung der Entfernung von Maschinenbefestigungselementen relativ zu einer zwischen den Maschinenwellen liegenden Symmetrieebene, welche die Achsen der Maschinenwellen im wesentlichen senkrecht schneidet.

Typischerweise werden zwei separate Laserlicht-Sende- und Empfangseinrichtungen vorgesehen, nämlich eine zur Bestimmung von Versatzmaßen an Wellen, und eine für die Bestimmung von Distanzen der Maschinenbefestigungselemente untereinander bzw. relativ zu einer zwischen den Maschinenwellen liegenden Symmetrieebene. In einer speziellen Ausführungsform der Erfindung wird nur eine einzige Laserlicht-Sende- und Empfangseinrichtung vorgesehen, welche wechselweise für die genannten Bestimmungen von Maßen und Distanzen herangezogen wird.

Charakteristisch für die Erfindung ist die Vorgehensweise, die elektronische bestimmten Entfernungen zwischen den Maschinenbefestigungselementen in automatischer Weise dem Rechengang zur Ermittlung von Korrekturwerten zuzuführen, mit dem die Verlagerungs-Werte errechnet werden, anhand derer eine optimale Ausrichtung der beteiligten Maschinen und Maschinenwellen ausgeführt werden kann. Dementsprechend ist es möglich, die genannte erste Recheneinheit und die genannte Auswerte- und Recheneinrichtung zur Bestimmung der Entfernung von Maschinenbefestigungselementen in einer einzigen elektronischen Schaltung zusammenzufassen. Diese elektronische Schaltung kann mit einer einzigen Bedienungs-Oberfläche (als Ausgabevorrichtung) und einer einzigen Eingabevorrichtung in funktionaler Verbindung stehen. Auf diese Weise wird es nunmehr möglich, auch den bislang manuell durchzuführenden Meßvorgang zur Bestimmung von Dimensionen rechnergestützt zu erledigen, wodurch das versehentliche Einbringen von Meßfehlern deutlich reduziert wird und die Ausricht-Maßnahme insgesamt vereinfacht wird.

Die Erfindung ist geeignet, bei unterschiedlich konstruierten Ausrichtvorrichtungen Verwendung zu finden. Diese Ausrichtvorrichtungen können daher einen einzigen Laserstrahl zur Bestimmung von Wellen-Versatzmaßen vorsehen, oder aber zwei separate Laserstrahlen.

Bei der genannten Distanzbestimmung von Entfernungen auf elektronischer Basis können wahlweise Triangulationsverfahren oder Laufzeitmessungen benutzt werden. Bei den Laufzeitmessungen können vergleichsweise einfache Reflektoren verwendet werden, welche sich auf ebenfalls einfach konstruierten Stativen befinden.

### Die Erfindung wird im einzelnen anhand der Zeichnung erläutert. Es zeigt

- Fig. 1: eine perspektivische Ansicht auf eine erfindungsgemäße mobile Einrichtung zur automatischen Eingabe von Distanz-Daten in ein Wellenausrichtsystem
- Fig. 2: eine Seitenansicht auf zwei Maschinen und ein Meßmittel in einer ersten Meßposition
- Fig. 3: eine Seitenansicht auf zwei Maschinen und ein Meßmittel in einer zweiten Meßposition
- Fig. 4: eine perspektivische Ansicht auf temporär befestigte Meßmittel zur automatischen Eingabe von Distanz-Daten in ein Wellenausrichtsystem
- Fig. 5: eine zu Fig. 4 vergleichbare Ansicht, wobei die Meßmittel in einer anderen Meßposition angeordnet sind.
- Fig. 6: eine weitere Ausgestaltung der Erfindung mit symmetrisch angeordnetem Reflektor

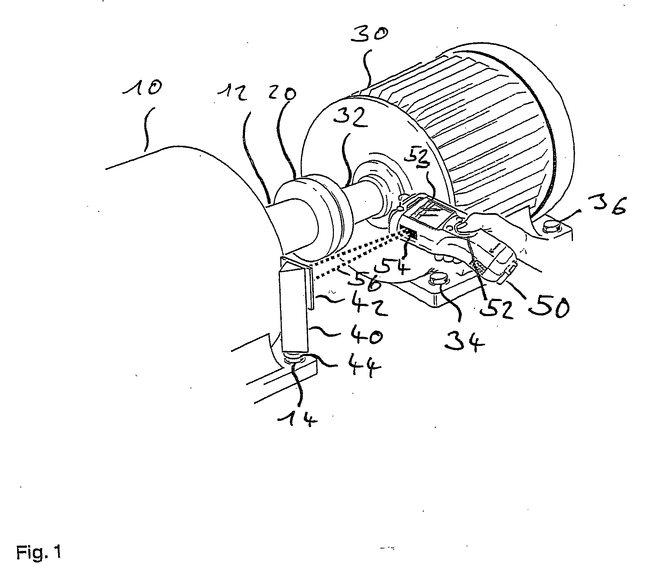

Wie in Fig. 1 gezeigt, sieht die Erfindung optische Meßmittel vor, mit denen die Distanzen, wie beispielsweise in der US 4,463,438 angegeben, automatisch erfaßt werden. Zwei Maschinen 10, 20 können mittels Bolzen und Muttern 14, 34, 36 usw. auf einer Befestigungsebene in eine gewünschte Position gebracht werden. Zur Positionierung der Maschinen in vertikale Richtung kann Unterlegmaterial (engl.: shims) verwendet werden, wie dies an sich bekannt ist, in der Zeichnung aber nicht näher ausgewiesen ist. Die Wellen 12, 32 der Maschinen 10, 20 stehen mittels Kupplung in Wirkverbindung, ihre Längsachsen sollten zur Vermeidung von Verschleiß und Maschinenschäden koaxial identisch sein.

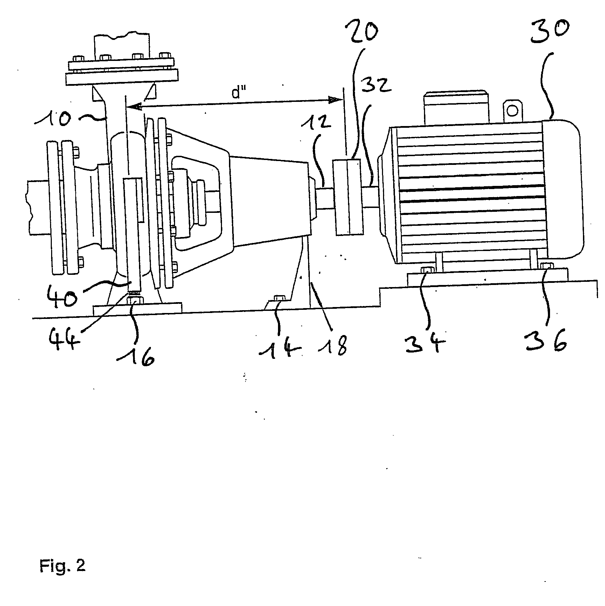

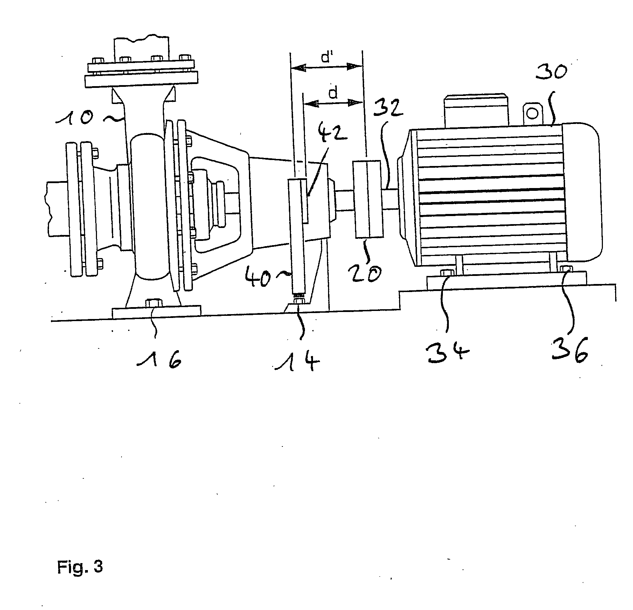

In der bevorzugten Ausführungsform der Erfindung gemäß Fig. 1 ist ein tragbarer Rechner 50 mit Eingabevorrichtung 52 und Display 53 vorgesehen, welcher in seiner Hauptfunktion mechanische oder optische Meßmittel (in Fig. 1 nicht gezeigt) zur Bestimmung des translatorischen und angularen Versatzes der Maschinen 10, 30 abfragt. Aus derart bestimmten Meßwerten werden die gewünschten Korrekturangaben errechnet, mit welchen die Maschinen in Idealpositionen gebracht werden können, sofern eine Fehlausrichtung vorliegen sollte. In Fig. 1 wird jedoch gezeigt, wie mittels des Rechners 50 zunächst die relevanten Maschinendimensionen erfaßt werden. Hierzu ist eine optisch wirkende Sende- und Empfangseinrichtung 54 vorgesehen. Mit dieser werden Lichtstrahlen 56 auf einen Reflektor 42 gesendet. Die von diesem zurückgesandten Lichtstrahlen werden durch die Empfangseinrichtung registriert. Entweder mittels Laufzeitmessung, oder durch Triangulation, ist es möglich, die Distanz zwischen Rechner 50 und Reflektor 42 in hinreichend genauer Weise zu bestimmen. Wie in Fig. 1 dargestellt, wird die Längsachse des Rechners 50 dazu manuell auf eine Mittelebene der Kupplung 20 ausgerichtet, da durch diese Mittelebene eine wichtige Referenzebene definiert wird. Der Reflektor 42 kann, je nach verwendetem optischen Meßverfahren, in unterschiedlicher Technologie gefertigt sein. Normalerweise weist er ein diffuses Reflexionsverhalten auf, so daß seine Orientierung relativ zum Rechner 50 unkritisch ist. Zur Positionierung des Reflektors 42 ist ein Stativ 40 von passender Länge vorgesehen. Das Stativ 40 kann mit einem Magnetfuß 44 ausgestattet sein, es kann aber auch direkt auf der zur Maschine gehörigen Befestigungsebene aufgestellt sein. Der Reflektor 42 kann daher manuell so positioniert werden, daß die Symmetrieachse des Stativs 40 parallel zur Längsachse der Mutter 14 oder des zugehörigen Bolzens zu liegen kommt Nach erfolgter Distanzmessung (wozu der Rechner 50 samt seiner Sende- und Empfangseinrichtung 54 verwendet wird) kann der Reflektor 42 für eine nachfolgende Messung von einer Meßposition in die nächste gesetzt werden (c.f. Fig. 2 und 3). Es sind typischerweise vier solcher Distanzmessungen auszuführen und im Speicher des Rechners für die weiteren Ausricht-Maßnahmen zu speichern.

Zur Ausführung der Distanzmessung weist der Rechner 50 eine Eingabevorrichtung 52 und einen Sichtschirm 53 auf. Die Eingabevorrichtung kann eine herkömmliche Tastatur sein, oder mittels einer Einknopf-Auswahlvorrichtung realisiert sein. - Es ist vorteilhaft, den Rechner mit einer Benutzer-Schnittstelle auf alphanumerischer, graphischer oder akustischer Basis auszustatten. Eine Bedienperson kann dann in bequemer Weise die unterschiedlichen Meßaufgaben sukzessiv und nach Maßgabe vorgegebener oder auswählbarer Partitionen abarbeiten.

In Fig. 2 wird gezeigt, wie das Stativ 40 oberhalb einer Befestigungsmutter 16 für die Messung des Distanzmaßes d" positioniert wird. In vergleichbarer Weise wird in Fig. 3 gezeigt, wie das Stativ 40 oberhalb der Befestigungsmutter 14, welche dem Maschinenfuß 18 zugeordnet ist, für die Messung des Distanzmaßes d' positioniert wird. Die Rechnersoftware kann so ausgelegt sein, daß die optisch bestimmte Distanz d automatisch in die zugrundezulegende Distanz d' umgerechnet wird, sofern dies erforderlich ist und der Reflektor 42 nicht ohnehin auf die Befestigungsmutter 14 ausgerichtet ist.

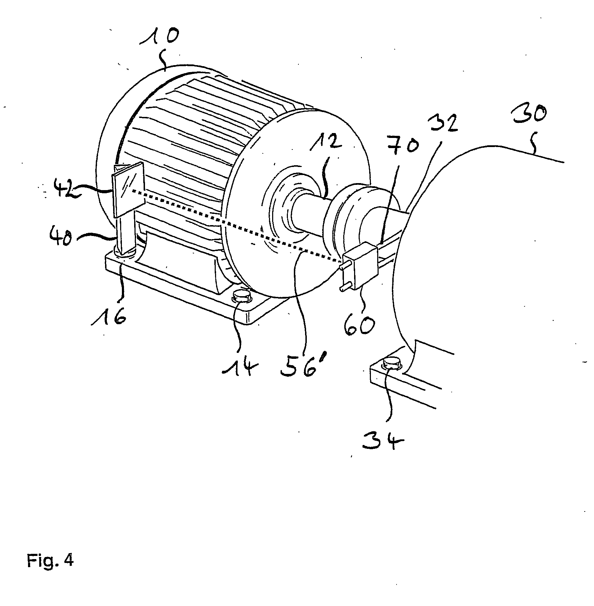

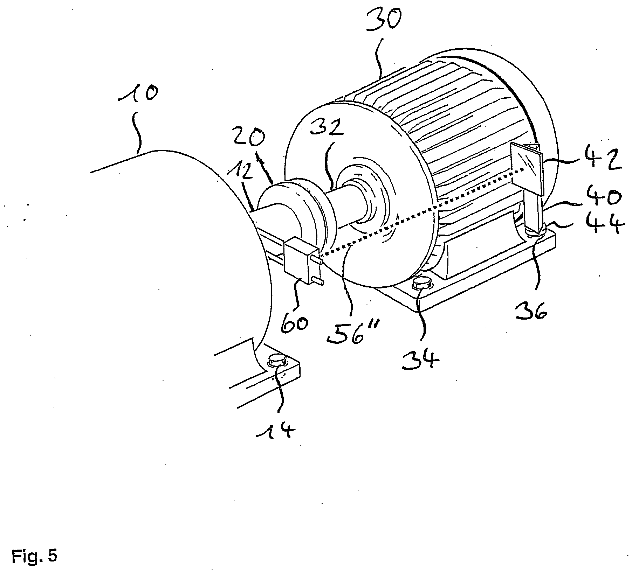

In Fig. 4 wird eine alternative Ausführungsform der Erfindung gezeigt. Hierbei wird zur Messung von Distanzen ein Lichtstrahl 56' vorgesehen, welcher durch eine Laserlichtquelle 60 erzeugt wird. Diese Lichtquelle kann die gleiche sein, welche vorrangig zum Vermessen des radialen und angularen Versatzes der Wellenstücke 12, 32 dient (zugehöriges Empfangsgerät oder Reflektor nicht gezeigt). Bevor die Meßdaten hinsichtlich der Wellenversatz-Maße erfaßt werden, führt die Laserlichtquelle im Zusammenspiel mit einer zugehörigen Empfangsvorrichtung (in Fig. 4, 5 nicht gezeigt) eine Entfernungsmessung aus, so daß die maßgeblichen Distanzen zwischen Kupplungsmitte und Befestigungsschrauben 14, 16 registriert werden können, oder gleichwertige Maßangaben, die sich durch eine Konstante unterscheiden. Es wird also gepulstes Licht zum Reflektor 42 gesandt, das reflektierte Licht wird mit einem schnellen Photodetektor sensiert, und aufgrund der Laufzeit wird die Distanz zum Reflektor 42 auf elektronische Weise ermittelt. Wie gezeigt, wird die Laserlichtquelle 60 temporär mit einer an sich bekannten Spannvorrichtung 70 an der Welle 32 befestigt.

Nach zwei ersten Messungen bezüglich der Position von Befestigungsmuttern 14, 16 wird die Laserlichtquelle 60 umgespannt bzw. umgesteckt und dient dann zur Distanzmessung bezüglich der Befestigungsmuttern 34, 36. Dies ist beispielsweise in Fig. 5 gezeigt, der zugehörige Laserlichtstrahl ist mit Bezugsziffer 56" gekennzeichnet.

Für den Fall, daß ein Meßsystem verwendet wird, welches mit zwei unabhängig voneinander arbeitenden Laserstrahlen arbeitet, können somit zwei Laserlichtquellen verwendet werden. Diese können zum Zwecke der Distanzmessung auf ihren zugehörigen Wellenstücken 12, 32 gegeneinander verdreht sein und dann im Zusammenspiel mit nicht nur einem einzelnen, sondern mit zugehörigen separaten Reflektoren 42 verwendet werden.

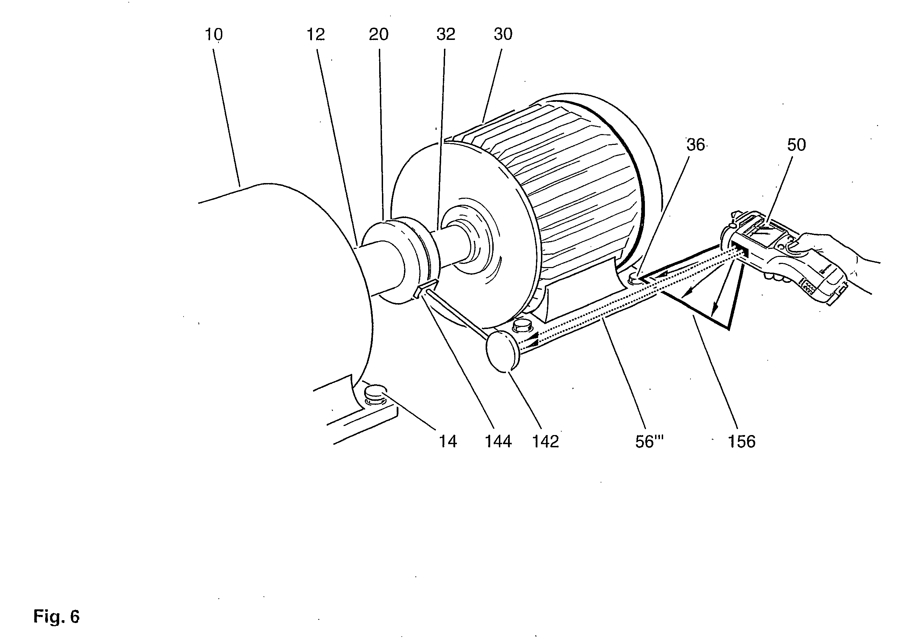

In Fig. 6 ist eine weitere Ausgestaltung der Erfindung gezeigt, welche sich durch einen symmetrisch angeordneten Reflektor 142 auszeichnet, welcher während der einzelnen Entfernungs-Messungen nicht umgesteckt oder umpositioniert werden muß. Dieser Reflektor ist im wesentlichen von flächiger Gestalt. Er weist bevorzugt zwei Rücken an Rücken angeordnete Reflexionsebenen auf. Der genannte Reflektor wird so angeordnet, daß die beiden Reflexionsebenen praktisch mit der zentralen Kupplungsebene koinzidiert, welche die Achsen der beteiligten Maschinen senkrecht schneidet. Zu diesem Zweck kann mit Vorteil ein Magnethalter 144 samt zugehöriger Stativstange vorgesehen. Die Stativstange kann vorteilhafterweise nach Art eines Teleskopes verlängert bzw. verkkürzt werden. Es können aber auch andere Stativ-Anordnungen verwendet werden, z.B. solche, welche auf den Hallenboden aufgestellt werden. Wie in Fig. 6 gezeigt, wird der Rechner 50 in Richtung einer Maschinenachse so lange bewegt, bis sich sein diesbezüglicher Koordinatenwert mit dem eines zu vermessenden Maschinenfußes bzw. einer zugehörigen Befestigungsschraube oder -bolzens übereinstimmt. Aus eienr solchen Position wird dann die Entfernung zwischen Rechner 50 und einer ersten Reflektorseite des Reflektors 142 optisch vermessen , wie dies durch den gezeichneten Lichtstrahl 56 ''' verdeutlich ist. Dieser Meßvorgang wird für alle interessierenden Koordinaten wiederholt. Er kann dadurch erleichtert werden und mit besserer Präzision erfolgen, wenn der Rechner einen Sender für einen Markierungsstrahl 156 aufweist. Die Lichtstrahlen, welche diesen Markierungsstrahl erzeugen, spannen eine Ebene auf, welche im wesentlichen senkrecht zum Meßstrahl 56'" orientiert ist. Sobald der Markierungsstrahl 156 z.B. die Achse der Befestiungsschraube 36 beleuchtet und der Meßstrahl 56''' den Reflektor treffen kann, ist der Rechner 50 bis auf geringe Restfehler korrekt positioniert.

## Patentansprüche

1. Vorrichtung zum Ausrichten von zwei miteinander gekuppelten Maschinenwellen, mit
- mindestens einer Laserlichtquelle zum Aussenden von Laserlicht
- mindestens einem Reflektor für die Reflektion des Laserlichtes
- mindestens einer Empfangsvorrichtung für den Empfang des Laserlichtes
- einer ersten Recheneinrichtung zur Bestimmung des parallelen und angularen Versatzes der Maschinenwellen
- einer Auswerte- und Recheneinrichtung zur Bestimmung der Entfernung von Maschinenbefestigungselementen relativ zu einer zwischen den Maschinenwellen liegenden Symmetrieebene, welche die Achsen der Maschinenwellen im wesentlichen senkrecht schneidet

2. Vorrichtung nach Anspruch 1, **dadurch gekennzeichnet, daß** die erste Recheneinrichtung die Bestimmung eines parallelen oder angularen Versatzes der Maschinenwellen unter automatischer Verwendung von Meßwerten durchführt, welche von der Auswerte- und Recheneinrichtung zur Bestimmung der Entfernung von Maschinenbefestigungselementen bereitgestellt worden sind.

3. Vorrichtung nach Anspruch 1 oder 2, mit einer Entfernungsmeßeinrichtung, welche auf dem Prinzip einer Laufzeitbestimmung von Licht beruht, oder mit einem Triangulationsverfahren arbeitet.

4. Vorrichtung nach einem der vorhergehenden Ansprüche, **dadurch gekennzeichnet, daß** der Entfernungsmeßeinrichtung eine separate Sende- und Empfangsvorrichtung für Laserlicht zugeordnet ist.

5. Vorrichtung nach einem der vorhergehenden Ansprüche, insbesondere nach Anspruch 4, **dadurch gekennzeichnet, daß** ein Reflektor und ein zugehöriges Stativ vorgesehen ist, welche manuell in der Nähe eines Befestigungselementes einer Maschine positioniert werden können.

6. Vorrichtung nach einem der vorhergehenden Ansprüche, **dadurch gekennzeichnet, daß** ein einziger Reflektor vorgesehen ist, welcher sowohl bei der Bestimmung von Versatz-Maßen der Maschinenwellen verwendet wird, als auch bei der Bestimmung der Distanzen der Befestigungselemente der Maschinen relativ zu einer zwischen den Maschinen liegenden Symmetrie-Ebene.

7. Vorrichtung nach einem der vorhergehenden Ansprüche, mit einer gemeinsamen Bedienungs-Oberfläche für sowohl
- die erste Recheneinheit als auch
- die Auswerte- und Recheneinrichtung zur Bestimmung der Entfernung von Maschinenbefestigungselementen.

8. Vorrichtung nach einem der vorhergehenden Ansprüche, mit einem Laserausrichtsystem auf Basis mindestens eines Laserstrahles.

9. Verfahren zum Ausrichten von Maschinenwellen, welches folgende Schritte einbezieht:
- Bereitstellung eines optischen Laserausrichtsystems
- Bereitstellung eines optischen Entfernungsmeßsystems
- Positionierung eines zum optischen Entfernungsmeßsystem zugehörigen Reflektors in der Nähe von Maschinen-Befestigungselementen
- Ermittlung von Distanz-Daten zwischen Maschinen-Befestigungselementen und einer symmetrisch zwischen den Maschinenwellen gelegenen Ebene, auf optoelektronischer Basis
- Ermittlung von Meßdaten, welche durch einen Wellen-Parallelversatz und einen Wellen-Winkelversatz verursacht sind
- Berechnung von Korrekturwerten, anhand welcher eine Verlagerung einer Maschine zum Zwecke der vollständigen Ausrichtung der Wellen vorgenommen werden kann

10. Verfahren nach Anspruch 9, **dadurch gekennzeichnet, daß** die Berechnung der Korrekturwerte automatisch durchgeführt wird, wobei zumindest folgende Daten verwendet werden:
- die ermittelten Distanz-Daten und
- die Meßdaten, die auf einem Wellenversatz beruhen.

11. Verfahren zum Ausrichten von Maschinenwellen, welches folgende Schritte einbezieht:
- Bereitstellung eines optischen Laserausrichtsystems
- Bereitstellung eines optischen Entfernungsmeßsystems
- Positionierung eines zum optischen Entfernungsmeßsystem zugehörigen Reflektors in der Nähe einer Maschinenkupplung
- Ermittlung von Distanz-Daten zwischen Maschinen-Befestigungselementen und einer symmetrisch zwischen den Maschinenwellen gelegenen Ebene, auf optoelektronischer Basis
- Ermittlung von Meßdaten, welche durch einen Wellen-Parallelversatz und einen Wellen-Winkelversatz verursacht sind
- Berechnung von Korrekturwerten, anhand welcher eine Verlagerung einer Maschine zum Zwecke der vollständigen Ausrichtung der Wellen vorgenommen werden kann

12. Verfahren nach Anspruch 11, **dadurch gekennzeichnet, daß** die Berechnung der Korrekturwerte automatisch durchgeführt wird, wobei zumindest folgende Daten verwendet werden:
- die ermittelten Distanz-Daten und
- die Meßdaten, die auf einem Wellenversatz beruhen.

13. Vorrichtung zum Ausführen des Verfahrens nach einem der Ansprüche 11 bis 12, **dadurch gekennzeichnet, daß** eine zweiseitig reflektierende Reflektor-Vorrichtung (142) vorhanden ist.

14. Vorrichtung zum Ausführen des Verfahrens nach einem der Ansprüche 9 bis 12, **dadurch gekennzeichnet, daß** das optische Entfernungsmeßsystem und das optische Ausrichtsystem in einem gemeinsamen Gehäuse angeordnet sind.
